Europäisches Patentamt

European Patent Office

Office européen des brevets

(11) Publication number: **0 280 507**
**A1**

## (12) EUROPEAN PATENT APPLICATION

(21) Application number: 88301524.0

(22) Date of filing: 23.02.88

(51) Int. Cl.⁴: **A 61 C 15/04**

(30) Priority: 24.02.87 GB 8704249
22.12.87 GB 8729820
18.07.87 GB 8717002

(43) Date of publication of application:
31.08.88 Bulletin 88/35

(84) Designated Contracting States:
AT BE CH DE ES FR GB GR IT LI LU NL SE

(71) Applicant: **Green, Alan Joseph**
**73 Ayr Road Newton Mearns**
**Glasgow, G77 5QU Scotland (GB)**

(72) Inventor: **Green, Alan Joseph**
**73 Ayr Road Newton Mearns**
**Glasgow, G77 5QU Scotland (GB)**

(74) Representative: **Wotherspoon, Graham et al**
**FITZPATRICKS 4 West Regent Street**
**Glasgow G2 1RS Scotland (GB)**

(54) Device for use in oral hygiene.

(57) The device carries or contains a supply of flowable agent which has medicant or freshness properties and also a length of dental floss between a pair of limbs. The agent is expelled by the user in small doses towards the length of floss during use when the length of floss is located between the user's teeth. The device comprises a head 10 and boy 11 and contains a supply of floss 12 which is threaded through the device 10, 11 between a pair of limbs 14, 15 and back into the device to exit through an outlet 34. The outlet is adjacent to a hinged clamp 35 which traps the floss 12 to tension the length between the limbs or releases the floss so that the free end can be drawn out to locate a fresh length between the limbs. The agent is contained in a refillable or replaceable syrings or ampule 21 contained in the body of the device. The body can be opened for replenishment and threading of the floss and to remove and replace the syringe. A mechanism 22 is provided for manual manipulation to move a plunger into the syrings/ampule to cause agent to be expelled.

In a disposable version, the device comprises a flat holder 50 on which is mounted on one or both sides, a pliable tubular sack 54 which, on finger pressure, ejects agent towards a short length of floss 53 attached to limbs 51, 52 of the holder.

FIG 4

EP 0 280 507 A1

Bundesdruckerei Berlin

**Description**

## DEVICE FOR USE IN ORAL HYGIENE.

This invention relates to a device for use in oral hygiene.

Dental floss is now a well known product and the term 'dental floss' is intended to include both thin string-like material and flat tape-like material.

Dental floss can be used by holding a small length of the material between two fingers and running it up and down the gap between two teeth. Alternatively holders have been devised to which a length of dental floss can be attached so that the short useful portion of the floss is strung between two prongs.

In either case the floss can be obtained from a supply contained in a container, the required length being drawn out and broken off. Containers are known which contain a reservoir of medication in which the supply of floss is located or through which the length of floss to be drawn out passes so that the length of floss to be used is pre-medicated.

A disdvantage of the pre-medicated floss is that some, if not all the medicant agent can be inadvertantly thrown off the length of floss if that floss rubs against rough contact points on a tooth while being inserted between two teeth. Thus while the floss could penetrate below the level of the gum to provide sub-gingival treatment it could only remove a certain amount of plaque which lies between two teeth interproximally or sub-gingivally.

It is also known to provide a floss holder device which contains a supply of floss threaded through the device so that a short length of floss spans a pair of prongs externally of the device and can be renewed by manually or mechanically drawing a fresh length of floss into the gap between the prongs.

It is an object of this invention to obviate or mitigate the aforesaid disadvantages and to create an improved applicator for a medication which can penetrate below the gum to provide more efficient interproximal or sub-gingival treatment.

Therefore, in accordance with one aspect of the present invention, there is provided a device for use in oral hygiene comprising a holder which carries a short length of dental floss material externally of the holder between spaced locations and a supply of agent on or in said holder, said agent having medication or freshness properties to be applied to or adjacent to the dental floss material.

In use the agent is preferably applied to or toward the dental floss material between the spaced locations after the floss is in position between two teeth and has passed any rough contact points on the teeth which may tend to dislodge medication from the floss. The agent is supplied to the floss in small dozes and when applied in this way follows the floss directly to the required site, thereby avoiding dilution by saliva.

In accordance with another aspect of the invention, there is provided a device for use in oral hygiene comprising a holder which carries a supply of dental floss material of which a short length is drawn therefrom and located externally of the holder between spaced locations, and is slidably replaceable by a fresh length, said holder also carrying a supply of agent having medication or freshness properties adapted to be applied to the floss material upstream of or between the said spaced locations.

The supply of agent may be a reservoir within the holder and through which the length of floss material passes upstream of the said spaced locations.

Preferably however, the supply of agent is in a container from which it is expelled by pressure towards the floss material.

Preferably also, the agent is expelled towards the length of floss material located between said spaced locations.

The agent may be a gel or paste to be expelled in droplets, or a liquid (including water) to be expelled as a spray.

The container containing the agent may comprise a pliable tubular sack located on the holder and adapted on finger pressure to eject agent therefrom.

Alternatively, said container may be formed by the body of a holder or be internally of said holder and is adapted to eject agent on finger pressure or by pump or syringe action.

Preferably, the container is a syringe located within the holder and means is provided in the holder to apply pressure to a plunger of the syringe.

Preferably, said spaced locations comprise a pair of spaced limbs between which the short length of dental floss material is located.

Said limbs may be located on a removable disposable head portion.

Preferably the holder has a head portion, and a body portion in the form of a casing openable for replenishment of the supply of floss and for threading a length of floss material from the supply to between the spaced locations.

Preferably also, a clamp means is provided in the casing, openable to allow movement of the floss material and closable to holdingly engage the floss material.

Preferably, the clamp has an inner face on which means is provided for engaging co-operating means in the casing to trap the length of dental floss material when the flap is in the closed position.

The device may be provided with a cap to overlie the exposed length of floss material and said spaced locations.

The casing may be provided with space to contain a tooth brush and preferably also the cap has space to locate a supply of tooth paste.

Embodiments of the present invention will now be described, by way of example, with reference to the accompanying drawings, in which:-

Fig. 1 is a side elevation of a device for use in oral hygiene, in accordance with the invention, but shown open;

Fig. 2 is a plan view of Fig. 1 but with the device shown closed;

Fig. 3 is an end view of Fig. 2;

Fig. 4 is a side elevation of a second embodiment of the invention;

Fig. 5 is a side elevation of a third embodiment;

Fig. 6 is an end view of Fig. 5

Fig. 7 is a side elevation of a fourth embodiment; and

Fig. 8 is a perspective view of Fig. 7.

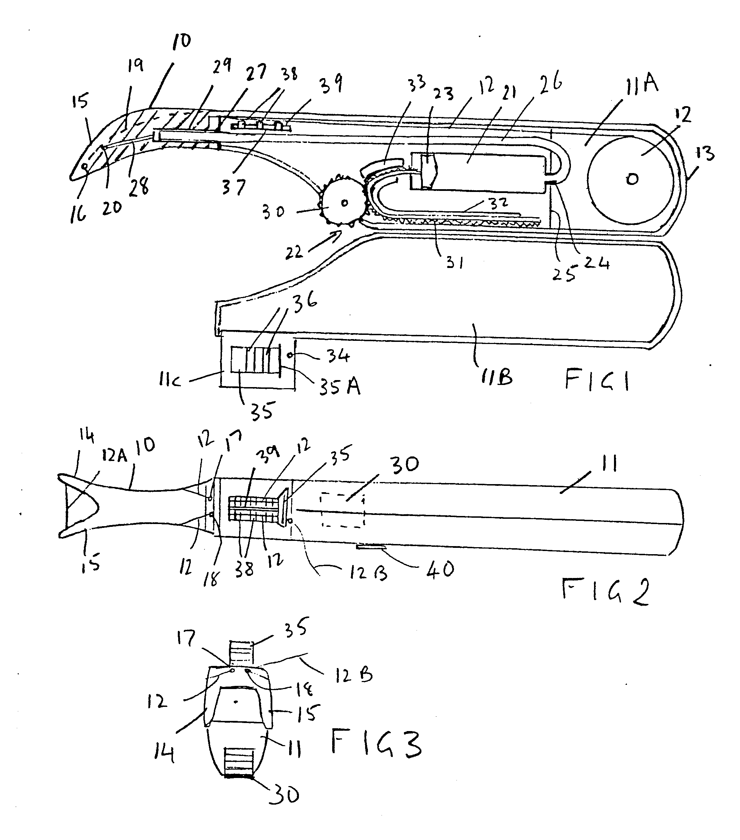

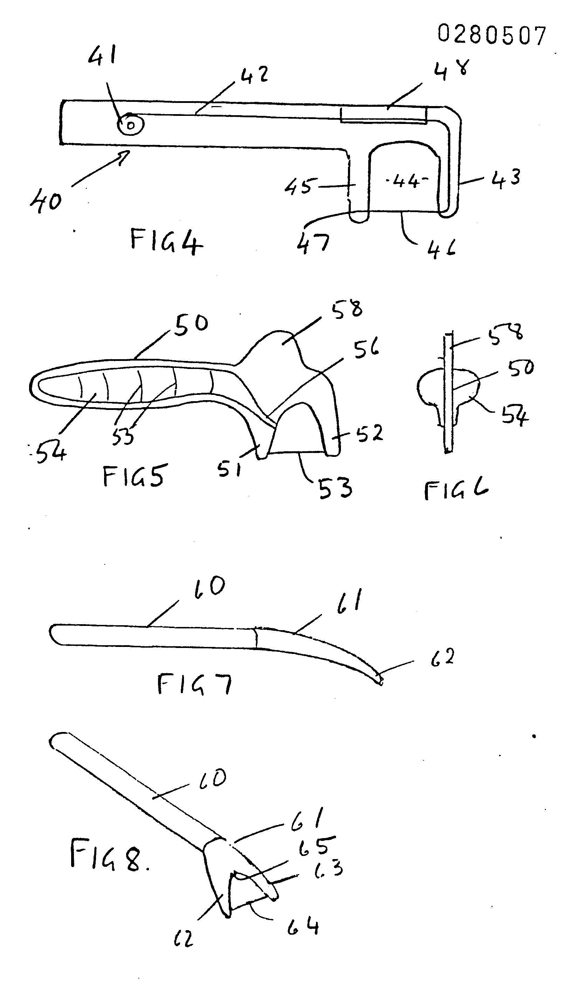

Referring firstly to Figs. 1 and 3, the device in the form of a holder comprises a head portion 10 and a body portion 11. A supply of floss 12 is contained at one end 13 of the body portion.

The head 10 which is shown in section in Fig. 1 has a pair of limbs 14, 15 at the end remote from the body 11 and each limb has a hole 16 by which a length of floss 12 can be threaded between the limbs. The body 11 has two holes 17, 18 by which the length of floss 12 can exit from and return to the body portion 11 as hereinafter described.

The limbs 14 are transversely spaced relative to the longitudinal axis of the body and extend forwardly at an angle, the head being shaped to provide a shallow concave surface on one side, hereinafter referred to as the underside of the device, the distance or 'reach' from the limbs to the body portion being provided for easy access of the limbs 14, 15 into the user's mouth.

The upper side of the head 10 lies in the plane of the upper side of the body 11.

A groove 19 is optionally provided on each side of the head to guide the floss 12 to and from the limbs 14, 15. Each limb 14, 15 also has a hole 20 through which a medication or freshness agent can be ejected from the device, as hereinafter described, onto or towards the length of floss 12A spanning the limbs 14, 15.

Within the body 11 is a supply of medication or freshness agent, in the form of a gel, paste or liquid and the liquid may be water. In this embodiment, the agent is a liquid contained in an ampule or syringe 21. A mechanism indicated generally as 22 is provided for manually ejecting a small amount of agent by moving a plunger 23 in the syringe to force a small amount of agent out of the syringe and through a passage to outlets 20 in the limbs 14. 15.

In this embodiment, the syringe 21 is placed with an exit nozzle 24 facing away from the head 10. The nozzle 24 locates against a rear strengthening bulkhead 25 which has an aperture therein from which a tube 26 extends, curving forwardly to run past the syringe towards a forward bulkhead 27. In this embodiment the tube 26 passes over the syringe under the upper wall of the body 11. The tube 26 leads to two narrow parallel channels 28 in the head terminating at the holes 20 through which the agent is expelled as a spray.

Also in this embodiment, the head and body portions, 10, 11 are separate parts which snap-fit together. Consequently the tube 26 projects longitudinally through forward bulkhead 27 to snugly fit into a recess 29 in the head, and the two narrow parallel channels 28 lead from said recess 29 to the holes 20.

The mechanism 22, of this embodiment comprises a toothed wheel 30 mounted on and partly extending out of the underside of the body 11 and a strip 31 which is toothed on one side for engagement with the wheel. The strip is contained in the body 11 and is supported by a ledge 32 and by a curved guide 33 which bends the strip through 180° to ensure close contact with the wheel and to direct the leading end of the strip against the plunger 23. In use, a slight rotation of the wheel 30 (by the user's thumb) will move the strip against the plunger 23 to push the plunger a short distance towards the next nozzle. Once the plunger has been pushed in by a sufficient amount to fill the tube 26 and channels 28 to the outlet holes 20, it is estimated that a syringe containing 4 ml of agent can be used over one hundred times. Any other suitable mechanism may be used to actuate the plunger, or an opening may be provided for manual pressure on a plunger.

The body 11 is a casing formed of two parts 11A, 11B hinged longitudinally at its underside so that the casing can be opened to insert the syringe 21 which when empty, can be removed and refilled or replaced. A housing for the syrings 21 and the other fittings 30-33 are all mounted on one part 11A of the casing and the other part 11B forms a closure and also a securing catch for the floss as hereinafter described. The casing 11 is also opened to thread a length of floss 12 through the device as follows; the free end of the floss is drawn along the upper part of casing 11A and out through the hole 17 which is on the upper part of the casing 11A. The floss 12 is then threaded through holes 16 in the limbs 14, 15 and returned into the casing 11A through hole 18 which is also in the upper part thereof, after which the casing parts 11A, 11B can be brought together. Casing part 11B however, has a hinged flap 11C at its upper forward end and that flap 11C remains open so that the free end 11B of the floss can be threaded through a hole 34 in the flap 11C, after which the hinged flap 11C can be closed.

The hinged flap 11C contains a clamp means comprising hinged inner flap 35 (hinged at 35A) the inner face of which has one or more inwardly directed projections 36 and the casing part 11A has a ledge 37 which has one or more complementary outwardly directed projections 38 and also a central longitudinal spine 39. As best seen in Fig. 2, the floss passes out of the casing over the projections 38 on one side of the spine 39 and returns into the casing in the other side. Thus, when the flap 11C and flap 35 are closed, the floss is trapped between the projections 36 and 38 and the floss between the limbs 14, 15 is tensioned to a greater or lesser degree depending on how much 'play' it has been allowed between the outgoing and incoming trapped portions of the floss. The flap 35 is shown open in Figs. 2 and 3.

A cutter 40 is attached to the outside of casing part 11B adjacent to the floss exit hole 34.

When the casing is closed, only the catch 34 need be opened to release the floss 12 and allow the free end 12B to be manually drawn out so as to present a fresh length 12A to span the limbs 14.

In this embodiment, the head 10 and body 11 are manufactured separately, as one-piece moulded units, from polypropylene.

The end face 13 of the body 11 may be rounded, (or location of the device in a pocket), or flat (for standing the device on a ledge or the like), for example, in a bathroom.

A cover, not shown may be provided to locate over the head to protect the exposed floss when the device is not in use.

The channels 28 and holes 20 from which the agent is expelled may be replaced by a single channel and one hole in one of the limbs 14, 15.

A substitute head, not shown, carrying a tooth brush may be provided to replace the floss carrying head when the user wishes to brush his teeth.

In use, the device is held by a user and the limbs 14, 15 placed in the mouth so that the length of floss 12A spanning the limbs 14, 15 locates between two teeth. Using the thumb, the user rotates the wheel 30 by a small amount so that agent is expelled from the head 10 onto the floss 12A.

In a second embodiment described with reference to Fig. 4, the holder 40 contains a spool 41 of dental floss 42, a length of which runs along a channel (not shown) in the holder body and down one limb 43 of the holder, then across a gap 44 to a second limb 45 to provide an exposed length of dental floss 46 for use. The end 47 of floss may extend from the second limb 45 for manual withdrawal to expose a fresh length of floss 46 between the limbs, or it may continue up the limb and along the holder to a take-up spool.

Within the holder is a supply of medicant or other agent which the length of floss passes before exiting from the first limb 43. The medicant may be contained in a reservoir 48, e.g. replaceab;e cartridge or refillable container which is preferably positioned in or close to the first limb 43. The portion of floss within the reservoir 48 will become medicated so that when it becomes the exposed length 46 it will provide an exposed length of medicated floss.

In this embodiment, the limbs 43, 45 are longitudinally spaced.

Referring now to Figs. 5 and 6 which illustrate a disposable version, the device comprises a thin flat plastics holder 50 having a pair of spaced limbs 51, 52 between which is secured a short length of dental floss 53.

The holder also has a tail 54, on each side of which is a tubular sack 55 containing a supply of anti-plaque medication or freshness agent, in liquid, paste or gel condition. Each sack 55 has an outlet 56 which directs the expelled agent towards the dental floss. In this embodiment, the end of each sack runs down a limb to terminate adjacent to the floss. The sacks are of pliable material, such as a transparent plastics film, and, by finger pressure, a supply of agent can be ejected from the outlets 56 on to or towards the dental floss. The sacks may have graduations 57 to encourage finger pressure at spaced intervals along the tail towards the floss end or 'head' of the device.

A flange 58 may be provided in the head portion remote from the dental floss to be held between two fingers by a user.

While two sacks have been shown in Figs. 5 and 6 only one may be provided.

In a fourth embodiment, Figs. 7 and 8, the device has a cylindrical body portion 60 and a head portion 61 having a pair of limbs 62-63 which carry a short length of dental floss 64 between them. The head portion 61 may be integral with or removable from the body portion 60.

The body portion contains the supply of medication or freshness agent which passes through an outlet 65 between the limbs on the application of pressure to the body portion; thus the body may be of a pliable material for finger pressure, or it may be in the form of a syringe (not shown) whereby manual pressure on a plunger will expel a small doze of agent from the head.

The agent may pass through a channel (not shown) in one or both limbs 62, 63 to exit via an outlet onto the short length of dental floss 64.

When the head is removable, e.g. for disposal after use, the dental floss may be fixedly attached to the limbs. When the head is not disposable relative to the body portion, the floss may have attachment means by which it can be removably attached to the limbs 62, 63; for example, small plastics pins attached to the ends of the short lengths of floss and which can locate in hole provided in the limbs of the holder. The head portion may be detachable from the body portion, simply to provide for re-filling of the body portion with a fresh supply of agent.

In use, a device for oral hygiene as hereinbefore described uses the dental floss not only to remove plaque but also to apply the medicant or other agent to all the areas likely to be affected; these include not only between the teeth and on the gum but also below the level of the gum where the gum has been forced away from the tooth by e.g. a build up of plaque, an area to which medication applied by a tooth brush is unlikely to reach. Thus, a user now has for the first time, a holder which has a supply of floss and a supply of agent, and which provides a means to deliver in one medication an effective interproximal and sub-gingival care.

In a modification of the device described with reference to Figs. 1 to 3, the casing may be provided with a space to contain the tooth brush and the cap may have a space to locate a supply of tooth paste.

## Claims

1. A device for use in oral hygiene comprising a holder 10, 11 which carries a short length of dental floss material 12 between spaced locations 14, 15 characterised in that a supply of flowable agent having medication or freshness properties is provided on or in said holder to be applied to or towards said dental floss material 12.

2. A device for use in oral hygiene comprising a holder 10, 11 which carries a supply of floss material 12 of which a short length 12A drawn from said supply is located externally of the holder between spaced locations 14, 15 and is slidably moveable for replacement by a fresh short length characterised in that a supply of agent having medication or freshness properties is provided in, or in containment means 21 carried by, said holder 10, 11 said holder or containment means being adapted to apply agent onto or towards said length of dental floss material upstream of or between said spaced locations.

3. A device according to claim 2, characterised in that means 21, 22, 23 is provided to eject agent onto or towards the floss upstream of or between said spaced locations.

4. A device according to claim 2 characterised in that the holder 10, 11 has internal passage means 26 from the supply of flowable agent to outlet means 20 at or adjacent to said spaced locations 14, 15 for ejection of the flowable agent towards the length of floss 12A between said spaced locations.

5. A device according to any one of claims 2 to 4 characterised in that the flowable agent is contained in a syringe device 21 removably located in the holder.

6. A device according to any one of claims 2 to 5 characterised in that the holder 10, 11 includes a body portion in the form of an elongate casing 11A, 11B hinged to open for replacement of the supply of floss material 12 and for threading of the floss material 12 within the holder.

7. A device according to claim 6, characterised in that the holder has a head portion 10 which has a pair of spaced limbs 14, 15 between which the exposed length of floss 12A is located.

8. A device according to claim 7 characterised in that the limbs 14, 15 are transversely spaced relative to the longitudinal axis of the holder 10, 11.

9. A device according to claim 7 or 8 characterised in that the head portion 10 is removeably attached to the casing 11.

10. A device according to claim 7 or 8 characterised in that the head portion is integral with one hinged portion of the casing.

11. A device according to any one of claims 2 - 10 characterised in that clamp means 35 is provided to secure the floss material 12 against slidable movement and to release said floss material to allow the floss material to be drawn from the supply to replace the short length of material between said spaced locations.

12. A device according to claim 11 when dependant on claim 6, characterised in that said clamp means 35 is attached to the casing 11B for opening to release the floss material for replacement of the portion between the limbs and for closing to secure the floss material, whereby a length of the floss material can be drawn through the holder without the need to open the casing.

13. A device according to claim 11 or 12 characterised in that the clamp means 35 carries one or more inwardly facing projections 36 adapted to co-operate with one or more complementary fixed projections 37 to trap the floss material therebetween.

14. A device according to claim 5 characterised in that a mechanism 22 is provided to actuate a plunger 23 of the syringe device 21.

15. A device according to claim 1 or 2 characterised in that the agent is a liquid which is expelled as a spray.

16. A device according to claim 1 or 2 characterised in that the agent is a gel or paste which is expelled in droplets.

17. A device according to claim 2 characterised in that the holder contains a supply of agent which is applied to a length of dental floss material upstream of the limbs 14, 15 whereby the length of floss material between said limbs is pre-treated.

18. A device according to claim 17, characterised in that the length of dental floss material passes through said supply of agent.

19. A device according to claim 1, characterised in that the agent is contained in containment means 55 externally of the holder and said containment means is adapted to expel agent therefrom onto or towards said length of dental floss material.

20. A device according to claim 19, characterised in that the containment means comprises a pliable tubular means 55 located on the holder and adapted by finger pressure to eject agent therefrom.

21. A device according to claim 1, characterised in that the agent is contained in a body of the holder 60 which body is attached to a head 61 carrying the length of floss 64 between a pair of spaced limbs 62, 63, and having outlet means 25 communicating with said body portion for ejection of agent therefrom on application pressure on the agent in the body portion.

22. A device according to claim 21, characterised in that the body or a portion thereof is of pliable material adapted by finger pressure to eject agent from the body.

23. A device according to claim 21, characterised in that the body is a syringe.

24. A device according to any one of claims 21 to 23, characterised in that the head 61 is removably attached to the body 60.

0280507

FIG 1

FIG 2

FIG 3

0280507

FIG4

FIG5

FIG6

FIG7

FIG8.

European Patent Office

EUROPEAN SEARCH REPORT

Application Number

EP 88 30 1524

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 128 253 (FOURIE) --- | 1-11 | A 61 C 15/04 |
| A | EP-A-0 080 440 (MINOZZI) --- | 1-11 | |
| A | US-A-4 518 000 (LEVERETTE) ----- | 2-11 | |

TECHNICAL FIELDS SEARCHED (Int. Cl.4)

A 61 C

The present search report has been drawn up for all claims

| Place of search | Date of completion of the search | Examiner |
|---|---|---|
| THE HAGUE | 19-05-1988 | RAKOWICZ,J.M. |

EPO FORM 1503 03.82 (P0401)